# EUROPÄISCHE PATENTANMELDUNG

(11) **EP 0 982 531 A1**
(43) Veröffentlichungstag der Anmeldung: **01.03.2000**
(21) Anmeldenummer: 99115646.4
(22) Anmeldetag: 07.08.1999
(51) Int. Cl.: F17D 1/04, H02J 3/28, G05B 13/02

(54) **Verfahren zum Steuern von Energieverbrauchseinrichtungen**

(30) Priorität: 14.08.1998 DE 19836842
(71) Anmelder: Gaswärme-Institut E.V., 45356 Essen (DE)
(72) Erfinder: Etzkorn, Heinz-Werner, Dr. rer. nat., Dipl.-Phys., 45257 Essen (DE)
(74) Vertreter: Harlacher, Mechthild, Dipl.-Ing.

(57) **Zusammenfassung**

Eine Mehrzahl von Energieverbrauchseinrichtungen, die jeweils einen Energiespeicher und einrichtungseigene Steuermittel aufweisen, ist an ein gemeinsames Versorgungsnetz sowie an eine gemeinsame Zentrale angeschlossen. Die Zentrale erfaßt und analysiert den von jeder Energieverbrauchseinrichtung abgerufenen Energiebedarf und erstellt für einen Zeitraum von 24 stunden ein entsprechendes Bedarfsprofil. Ferner werden die Ladezustände der Energiespeicher erfaßt. Auf der Basis des Bedarfsprofils und der aktuellen Ladezustände entwickelt die Zentrale eine Schaltsequenz und optimiert diese dahingehend, daß unter Erfüllung der Bedarfsanforderungen Verbrauchsspitzen minimiert werden. Die Zentrale schaltet die Energieverbrauchseinrichtungen entsprechend, wobei die einrichtungseigenen Steuermittel vorübergehend umgangen werden.

## Beschreibung

Kommunale Energieversorger stehen vor der Schwierigkeit, tagesabhängige Bedarfsspitzen kostengünstig abzudecken. Spitzenmengen an Energie sind nämlich besonders teuer.

Beispielsweise besteht die Möglichkeit, Großgasmengen in Kavernen zu speichern. Dabei ist die Ein- und Ausspeicherung sehr kostenintensiv. Diese Kosten schlagen sich insbesondere auf die Abdeckung von Verbrauchsspitzen nieder. Die Stadtwerke sind daher schon dazu übergegangen, die Speicherkapazität ihres Versorgungsnetzes zu nutzen und/oder eigene kostengünstigere kleine Speicher, z.B. Röhrenspeicher zu betreiben. Auch werden Flüssiggas/Luft-Beimischungen zur Abdeckung von Spitzengasmengen eingesetzt.

Der Erfindung liegt die Aufgabe zugrunde, die kostengünstige Abdeckung von Bedarfsspitzen zu verbessern.

Zur Lösung dieser Aufgabe schlägt die Erfindung ein Verfahren zum Steuern einer Mehrzahl von Energieverbrauchseinrichtungen vor, die jeweils einen Energiespeicher sowie einrichtungseigene Steuermittel aufweisen, wobei die Energieverbrauchseinrichtungen an ein gemeinsames Versorgungsnetz sowie jeweils über eine bidirektionale Daten- und Befehlsübertragungsverbindung an eine gemeinsame Zentrale angeschlossen sind und wobei die Zentrale
- für jede Energieverbrauchseinrichtung den über die einrichtungseigenen Steuermittel abgerufenen Energiebedarf erfaßt und analysiert,
- aus der Analyse für einen Zeitraum von 24 Stunden ein einrichtungsspezifisches Bedarfsprofil erstellt und aktualisiert,
- die Ladezustände der Energiespeicher der Energieverbrauchseinrichtungen erfaßt,
- auf der Basis der Bedarfsprofile und der aktuellen Ladezustände eine Schaltsequenz für die Energieverbrauchseinrichtungen entwickelt und dahingehend optimiert, daß unter Erfüllung der Bedarfsanforderungen Verbrauchsspitzen minimiert werden, und
- die Energieverbrauchseinrichtungen unter Umgehung der einrichtungseigenen Steuermittel in Abhängigkeit von der Schaltsequenz schaltet. Die Umgehung der einrichtungseigenen Steuermittel ist vorzugsweise zeitlich begrenzt.

Der Kern der Erfindung liegt darin, Verbrauchsspitzen in der bisher tolerierten Höhe nicht mehr auftreten zu lassen. Der Erfindung liegt die Erkenntnis zugrunde, daß hierzu die geräteeigene Speicherkapazität der Verbrauchseinrichtungen genutzt werden kann. Im Haushalt und im Kleingewerbe entwickelt jede Energieverbrauchseinrichtung ein tagesabhängiges spezifisches Bedarfsprofil, welches über mehr oder weniger lange Zeitperioden annähernd konstant bleibt. Die Erfassung sämtlicher Bedarfsprofile unter Einbeziehung der aktuellen Ladezustände der geräteeigenen Energiespeicher bietet die Möglichkeit, eine optimierte Schaltsequenz zu entwickeln, nach der die einzelnen Energieverbrauchseinrichtungen früher oder später ein- bzw. ausgeschaltet werden, als es der Verbraucher mit den geräteeigenen Steuermitteln vorgegeben hat. Dadurch lassen sich die Verbrauchsspitzen in überraschend starkem Maße abbauen.

Hat beispielsweise ein Verbraucher den Warmwasserspeicher seines Bades oder seine Heizung auf einen bestimmten Einschaltzeitpunkt programmiert, so kann die optimierte Schaltsequenz ergeben, daß es günstiger ist, den Einschaltzeitpunkt etwas vorzuverlegen. Zwar müssen dadurch geringfügig erhöhte Speicherverluste in Kauf genommen werden, jedoch wird dieser Nachteil durch die Minimierung des Spitzenverbrauchs mehr als ausgeglichen. Zeigt andererseits der Ladezustand an, daß der Speicher einer Energieverbrauchseinrichtung ausreichend gefüllt ist, so unterbindet die Zentrale eine Einschaltung, auch wenn der Verbraucher diese programmiert hat. Modulierende Steuerungen sind gleichermaßen möglich.

Der Anschluß der Energieverbrauchseinrichtungen an die Zentrale über jeweilige bidirektionale Daten- und Befehlsübertragungsverbindungen wird bereits in nächster Zukunft realisiert sein. Die Stadtwerke diskutieren schon heute die Erweiterung ihrer Dienstleistungen beispielsweise in den Bereich der Heizkostenabrechnungen hinein. Auch wird über die Möglichkeit einer zentralen Erfassung und Weiterleitung von Einbruch- und Brandmeldungen nachgedacht. Fernablesbare Zähler sowie die Möglichkeit einer Fernabfrage von Gerätestörungen stehen ebenfalls in der Diskussion. Als Übertragungsmittel kommen Bus-Systeme, funkgesteuerte sowie kabelgebundene bzw. funknetzunterstützte Kommunikationssysteme in Frage.

Die gemeinsame Zentrale arbeitet vorzugsweise mit einer Fuzzy-Logik oder einem selbstlernenden Algorithmus, um den Optimierungsprozeß zu verbessern.

## Patentansprüche

1. Verfahren zum Steuern einer Mehrzahl von Energieverbrauchseinrichtungen, die jeweils einen Energiespeicher sowie einrichtungseigene Steuermittel aufweisen, wobei die Energieverbrauchseinrichtungen an ein gemeinsames Versorgungsnetz sowie jeweils über eine bidirektionale Daten- und Befehlsübertragungsverbindung an eine gemeinsame Zentrale angeschlossen sind und wobei die Zentrale
- für jede Energieverbrauchseinrichtung den über die einrichtungseigenen Steuermittel abgerufenen Energiebedarf erfaßt und analysiert,
- aus der Analyse für einen Zeitraum von 24 Stunden ein einrichtungsspezifisches Bedarfsprofil erstellt und aktualisiert,
- die Ladezustände der Energiespeicher der Energieverbrauchseinrichtungen erfaßt,
- auf der Basis der Bedarfsprofile und der aktuellen Ladezustände eine Schaltsequenz für die Energieverbrauchseinrichtungen entwickelt und dahingehend optimiert, daß unter Erfüllung der Bedarfsanforderungen Verbrauchsspitzen minimiert werden, und
- die Energieverbrauchseinrichtungen unter vorzugsweise zeitlich begrenzter Umgehung der einrichtungseigenen Steuermittel in Abhängigkeit von der optimierten Schaltsequenz schaltet.

2. Verfahren nach Anspruch 1, dadurch gekennzeichnet, daß die gemeinsame Zentrale mit einer Fuzzy-Logik arbeitet.

3. Verfahren nach Anspruch 1, dadurch gekennzeichnet, daß die gemeinsame Zentrale mit einem selbstlernenden Algorithmus arbeitet.
